(19) Europäisches Patentamt
European Patent Office
Office européen des brevets

(11) **EP 2 493 123 B1**

(12) **EUROPÄISCHE PATENTSCHRIFT**

(45) Veröffentlichungstag und Bekanntmachung des Hinweises auf die Patenterteilung:
**10.04.2019 Patentblatt 2019/15**

(51) Int Cl.:
*H04L 12/28* *(2006.01)*   *H04L 29/12* *(2006.01)*
*H04L 12/10* *(2006.01)*   *H05B 37/02* *(2006.01)*

(21) Anmeldenummer: **12001165.5**

(22) Anmeldetag: **22.02.2012**

(54) **Lokalisierungssystem für Busteilnehmer**

Localisation system for bus participants

Système de localisation pour participants d'un bus

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2011 DE 202011003144 U**

(43) Veröffentlichungstag der Anmeldung:
**29.08.2012 Patentblatt 2012/35**

(73) Patentinhaber: **Tridonic GmbH & Co KG 6851 Dornbirn (AT)**

(72) Erfinder:
• **Neyer, Michael**
  **6700 Bludenz (AT)**
• **Pohn, Stephan**
  **6850 Dornbirn (AT)**

(74) Vertreter: **Rupp, Christian et al Mitscherlich PartmbB Patent- und Rechtsanwälte Sonnenstraße 33 80331 München (DE)**

(56) Entgegenhaltungen:
**AT-A4- 507 908     DE-A1-102008 053 487**

EP 2 493 123 B1

**Beschreibung**

Die vorliegende Erfindung betrifft ein System sowie dessen Komponenten zur verbindungslosen Lokalisierung von adressierbaren Busteilnehmern im Bereich der Gebäudetechnik, insbesondere bei Bussystemen, die wenigstens als Teil der Busteilnehmer Betriebsgeräte für Leuchtmittel aufweisen. Weitere adressierbare Teilnehmer können Aktoren (Jalousie-Steuerung etc.) und/oder Sensoren (Lichtsensor, Bewegungsmelder, Rauchmelder,...) sein.

Die Erfindung kann beispielsweise zum Einsatz kommen, wenn eine Busteilnehmeranordnung, beispielsweise in einem Gebäude installierte Busteilnehmer, in Betrieb genommen wird oder wenn die Busteilnehmer der Busteilnehmeranordnung neu (zu)geordnet werden sollen. Busteilnehmer können dabei insbesondere Leuchten oder Leuchtengruppen sein, die von einer Zentraleinheit angesteuert werden.

Für Licht(steuerungs)anlagen ist es hierbei bei ihrer Inbetriebnahme üblich ein Mobilgerät zu verwenden, das entweder Sichtkontakt mit der Zentraleinheit erfordert oder mit der Zentraleinheit über lange Kabelwege verbunden ist. Auch der Einsatz von Funkstrecken ist bekannt, wobei jedoch eine Funkverbindung zwischen Mobilgerät und Zentraleinheit bei weiträumig angelegten Installationen oder innerhalb von Gebäuden nur unzuverlässig arbeitet. Bei der Verwendung von einer kabelgebundenen Verbindung ist unter anderem zu bedenken, dass die Feuerschutzbestimmungen in verschiedenen Ländern eine Kabelführung über Brandabschnitte hinweg verbieten. Die Identifizierung der Busteilnehmer hat somit unter Umständen zur Folge, dass die Zentraleinheit ebenfalls bewegt werden muss.

Den Ausgangspunkt der Erfindung stellt die Patentschrift AT 507 908 A4 dar, in der ein System beschrieben wird, in dem ein getaktetes Basisgerät adressierte Busteilnehmer getaktet ein- und ausschaltet und in dem über ein gleich getaktetes Mobilgerät protokolliert wird, zu welchem Takt ein bestimmtes Betriebsgerät aktiviert/deaktiviert wird.

Mit dem System nach dem Stand der Technik soll eine Zuordnung der Geräte an dem Steuerbus zu einer Adresse erfolgen. Das Basisgerät vergibt Adressen an alle Geräte und schaltet alle Geräte entsprechend ihrer Adressen ein (aus). Anschließend werden die einzelnen Geräte der Reihe nach ab(ein) geschaltet. Gleichzeitig speichert das Basisgerät den Zählerstand zum Zeitpunkt des Abschaltens des Geräts. Nachdem alle Komponenten abgeschaltet sind, beginnt der Vorgang wieder von vorne, bis der gesamte Prozess beendet wird. Ein Benutzer bewegt sich mit dem Mobilgerät durch das Gebäude und übermittelt dem Mobilgerät einen Auslösebefehl, wenn ein Busteilnehmer ausgeschaltet wird. Durch den Auslösebefehl wird im Mobilgerät zu diesem Auslösebefehl der aktuelle Zählerstand gespeichert und der Benutzer vermerkt in einem Geräteplan die Bezeichnung des Gerätes, welches ausgeschaltet wurde. Sind alle Räume des Gebäudes bzw. alle Komponenten an dem Steuerbus abgeschritten, so soll zu jedem Gerät ein Auslösebefehl erfolgt sein. Anschließend kann das Ein-/ Ausschalten der Geräte durch das Basisgerät beendet werden und es kann eine Kommunikationsverbindung zwischen dem Basisgerät und dem Mobilgerät aktiviert werden. Durch einen Vergleich der Zählerstände im Mobilgerät zum Zeitpunkt des Auslösebefehls und zum Zeitpunkt der Auslöseaktion durch das Basisgerät werden die Adressen der Reihenfolge der Tastendrücke zugeordnet und über den Geräteplan wird einer Adresse ein Gerät zugeordnet.

Die im Stand der Technik beschriebene Vorgehensweise hat jedoch verschiedene Nachteile.

Entweder ist es notwendig, da das Mobilgerät lediglich dazu in der Lage ist, einen Auslösebefehl anzunehmen und einen Takt zu speichern, zusätzliche Informationen, z.B. in einem Geräteplan festzuhalten, um später eine den Takt, an dem der Auslösebefehl gespeichert wurde, dem ausgeschalteten Gerät zuordnen zu können. Der Stand der Technik lässt offen, wie hier eine Zuordnung zwischen der tatsächlichen Gerätebezeichnung und der Geräteadresse zustande kommt. Zwar beschreibt der Stand der Technik, dass das Mobilgerät einen Auslösebefehl zu einem bestimmten Takt speichert und dass dann in einem separaten Gebäude/Geräteplan eine Beschreibung für das entsprechende Gerät vermerkt wird. Jedoch beschreibt der Stand der Technik nicht, wie die Beschreibung des Geräts in Zuordnung mit der Adresse gebracht werden kann, da das Mobilgerät lediglich dazu eingerichtet ist, einen Auslösebefehl anzunehmen und keine weiteren Eingaben durch den Benutzer notwendig sind.

Oder die Geräte müssen in einer vorbestimmten Reihenfolge erfasst werden, so dass zunächst Gerät 1 gesucht werden muss und auf einen Auslösebefehl hin der Takt gespeichert wird, an dem Gerät 1 ausgeschaltet wird. So kann anschließend ein Gerät mit einer Adresse des Basisgeräts über den Takt in Verbindung gebracht werden. Bis ein Gerät erneut erfasst werden kann ist es dann notwendig, einen gesamten Ausschalt-/Einschaltzyklus abzuwarten.

Da die Taktlänge fest vorgegeben ist, ergibt sich somit keine Möglichkeit, in bestimmten Situationen das Zuweisungsverfahren zu beschleunigen. Darüber hinaus muss auch das Mobilgerät dazu ausgebildet sein, die spezifische Taktung genau nachzuführen.

Es ist daher eine Aufgabe der Erfindung, ein System und entsprechende Komponenten bereitzustellen, das/die eine einfache Zuordnung zwischen Adressen von Busteilnehmern und Busteilnehmerbezeichnungen ermöglicht/ermöglichenden Erfassungsprozess möglichst effizient zu gestalten ohne dass die oben beschriebenen Nachteile auftreten.

Zusammenfassung der Erfindung

Die Erfindung stellt deshalb eine Zentraleinheit, und ein System bereit, wie sie/es durch die unabhängigen Ansprüche beansprucht werden/wird. Zudem wird ein Verfahren zur Lokalisierung (Adresszuordnung) offenbart. Weitere vorteilhafte Ausgestaltungen der Erfindung sind Gegenstand der unabhängigen Ansprüche.

In einem Aspekt stellt die Erfindung eine Zentraleinheit für ein Gebäudetechnik-Bussystem bereit, die über einen Bus mit mehreren Gebäudetechnik-Busteilnehmern verbindbar ist. Die Zentraleinheit ist neben dem normalen Betriebsmodus, in dem adressierte Bustelegramme durch die Zentraleinheit gesendet und/oder empfangen werden, in einen weiteren Betriebsmodus versetzbar. In dem weiteren Betriebsmodus ist eine Steuereinheit der Zentraleinheit dazu ausgelegt, dass sie:

- eine durchlaufende Zeitzählung ausgehend von einem definierten Zeitpunkt startet, und
- jeweils einen Busteilnehmer durch einen adressierten Busbefehl aktiviert, vorzugsweise bis nacheinander sämtliche Busteilnehmer aktiviert wurden. Die Zentraleinheit weist auf oder ist funktionell verbunden mit einem Speicher, in dem die Zentraleinheit einen Zeitpunkt oder einen Zeitraum der Aktivierung des Busteilnehmers zugeordnet zu seiner Adresse ablegt.

Die Zentraleinheit ist dazu eingerichtet, während der Aktivierungs-/Deaktivierungsfolge eines Busteilnehmers ein Signal über den Bus zu empfangen und daraufhin einen anderen Busteilnehmer zu aktivieren/deaktivieren.

Der Zeitpunkt kann bspw. der Zeitpunkt der Absendung des adressierten Busbefehls sein. Der Zeitraum der Aktivierung kann in diesem Busbefehl mit vorgegeben sein. Vorzugsweise endet der Aktivierungszeitraum indessen damit, dass ein weiterer adressierter Busbefehl die Deaktivierung veranlasst.

Der Busbefehl kann derart gestaltet sein, dass die folgende Aktivierung/Deaktivierung kürzer ist, als die vorgehende Aktivierung/eine aktuelle Aktivierung beendet wird und/oder ein anderer Busteilnehmer aktiviert/deaktiviert wird.

Die Zentraleinheit kann einen Zeitgeber aufweisen und/oder dazu eingerichtet sein, ein Zeitsignal zu empfangen.

Der definierte Zeitpunkt und/oder die Zeitzählung kann mit einem Eingabegerät synchronisiert sein.

Die Zentraleinheit kann mindestens eine Schnittstelle zur Verbindung und/oder für einen Datenaustausch mit einem Mobilteil aufweisen.

Ein System aus einer Zentraleinheit und einem tragbaren oder zumindest mobilen Eingabegerät wird in einem noch weiteren Aspekt der Erfindung bereitgestellt, wobei die Zentraleinheit und/oder das Eingabegerät dazu eingerichtet sind, in einem Abgleichprozess dem von dem Eingabegerät gespeicherten Zeitpunkt oder Zeitraum einen von der Zentraleinheit gespeicherten Zeitpunkt oder Zeitraum zuzuordnen und so eine Zuordnung zwischen dem Zeitpunkt oder Zeitraum in der Zentraleinheit zugeordneten Adresse und dem Zeitpunkt oder Zeitraum in dem Eingabegerät zugeordneten Bezeichner herzustellen.

Weiter stellt die Erfindung ein Verfahren zur Lokalisierung von an einem Bus angeschlossenen Busteilnehmern bereit, wobei eine Zentraleinheit, die eine durchlaufende Zeitzählung ausgehend von einem definierten Zeitpunkt startet, jeweils einen Busteilnehmer durch einen adressierten Busbefehl aktiviert/deaktiviert, vorzugsweise bis nacheinander sämtliche Busteilnehmer aktiviert/deaktiviert wurden, und bei Aktivierung/Deaktivierung eines Busteilnehmers für einen Zeitpunkt oder Zeitraum eine Adresse des Busteilnehmers in Zuordnung zu dem Zeitpunkt oder Zeitraum speichert, ein Eingabegerät eine durchlaufende Zeitzählung ausgehend von einem definierten Zeitpunkt startet und in einem Speicher ein Zeitpunkt oder Zeitraum zugeordnet zu einem Bezeichner auf eine Benutzerinteraktion hin speichert, und wobei die Zentraleinheit und/oder das Eingabegerät in einem Abgleichprozess dem von dem Eingabegerät gespeicherten Zeitpunkt oder Zeitraum einen von der Zentraleinheit gespeicherten Zeitpunkt oder Zeitraum zuordnet und so eine Zuordnung zwischen dem Zeitpunkt oder Zeitraum in der Zentraleinheit zugeordneten Adresse und dem Zeitpunkt oder Zeitraum in dem Eingabegerät zugeordneten Bezeichner herzustellen.

In noch einem Aspekt stellt die Erfindung ein Verfahren bereit, in dem eine Zentraleinheit in einen Betriebsmodus: eine durchlaufende Zeitzählung ausgehend von einem definierten Zeitpunkt startet, jeweils einen Busteilnehmer durch einen adressierten Busbefehl aktiviert/deaktiviert, vorzugsweise bis nacheinander sämtliche Busteilnehmer aktiviert wurden, und wobei die Zentraleinheit einen Speicher aufweist oder funktionell mit einem Speicher verbunden ist, in dem ein Zeitpunkt oder Zeitraum der Aktivierung/Deaktivierung des Busteilnehmers zugeordnet zu seiner Adresse abgelegt wird.

In noch einem weiteren Aspekt stellt die Erfindung ein Verfahren bereit, in dem ein Eingabegerät, das einen Speicher aufweist oder funktionell mit einem Speicher verbunden ist, eine durchlaufende Zeitzählung ausgehend von einem definierten Zeitpunkt startet und in dem Speicher ein Zeitpunkt oder Zeitraum zugeordnet zu einem Bezeichner abgelegt und wobei das Eingabegerät den Zeitpunkt oder Zeitraum in Zuordnung mit dem Bezeichner auf eine Benutzerinteraktion an einer Benutzerschnittstelle speichert.

Im Folgenden wird die Erfindung mit Bezug auf die Figuren beschrieben, die weitere Ausprägungen der Erfindung zeigen.

Kurze Beschreibung der Figuren

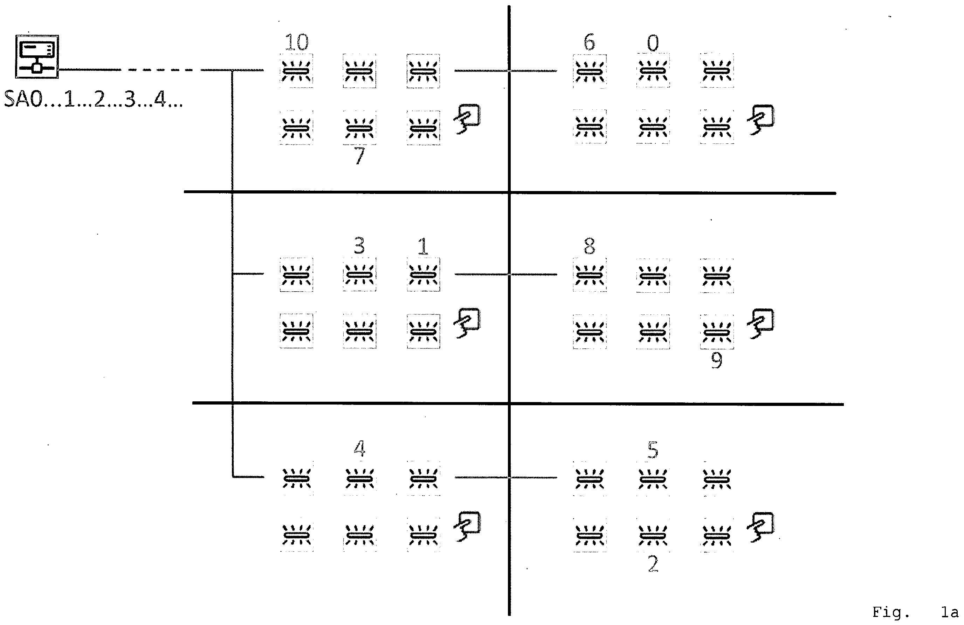

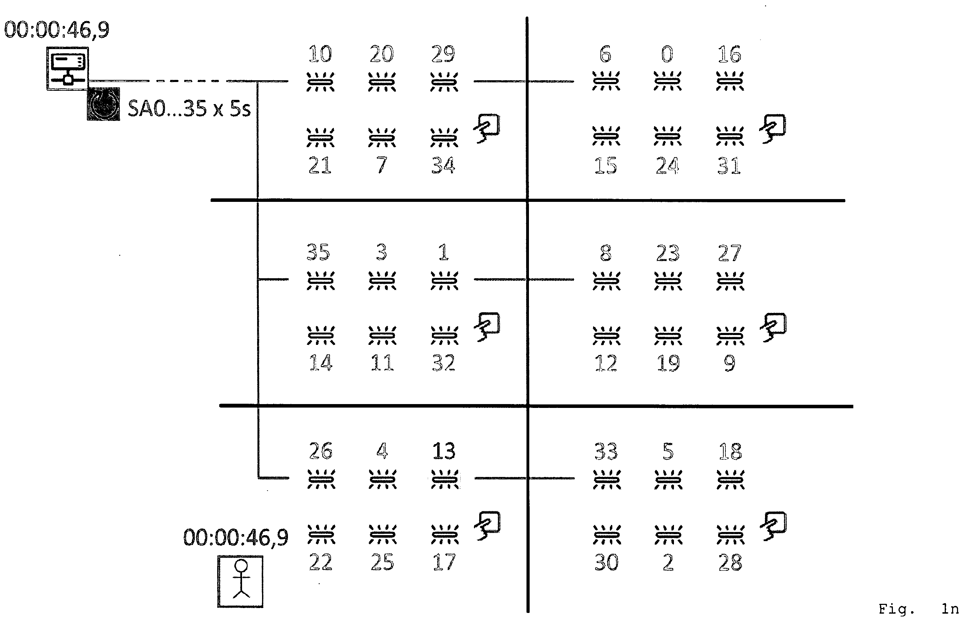

Fig. 1a -1r zeigen ein Verfahren unter Verwendung des erfindungsgemäßen Systems und seiner Komponenten.

Detaillierte Beschreibung der Erfindung

Eine Aufgabe der Erfindung ist es also, Identifikationsinformationen wie z.B. Adressen der Busteilnehmer mit zusätzlichen Informationen in Verbindung zu bringen. Insbesondere soll die Erfindung leisten, dass Busteilnehmern mit zuvor werksseitig oder durch eine Zentraleinheit zugewiesenen Adressen eine Benutzeradresse oder Benutzer-Identifizierung zugewiesen werden kann.

Das erfinderische System verwendet hierbei beispielsweise mindestens eine Zentraleinheit, die in Zusammenwirkung mit einem entsprechenden Eingabegerät verwendet wird, um eine entsprechende Zuordnung zu erreichen.

Erfindungsgemäß ist die Zentraleinheit mit mehreren Busteilnehmern verbunden und vergibt Adressen, zum Beispiel Short-Adressen, an die Busteilnehmer. Da die Zentraleinheit keine Kenntnis über die tatsächliche Position/Lage/Zugehörigkeit zu einer Organisationseinheit der Busteilnehmer, zum Beispiel in einem Gebäude, hat, muss eine Zuordnung zwischen diesen Informationen des Busteilnehmers und seiner Adresse erfolgen.

Nach der Erfindung werden nun die Busteilnehmer ihrer Adresse nach, zum Beispiel nach auf-/absteigender Adresse, aktiviert. Im Falle von Busteilnehmern, die Ausgangsgeräte, zum Beispiel Leuchten, darstellen, werden diese einfach an- bzw. ausgeschaltet. Im Fall von Busteilnehmern, die als Eingangsgeräte, zum Beispiel Schalter, ausgestaltet sind, kann eine Rückmeldung an die Zentraleinheit über eine manuelle Betätigung dieser Busteilnehmer erfolgen.

Das erfindungsgemäße Eingabegerät dient dabei neben einer Protokollierung eines Zeitpunktes oder eines Zeitraumes, für den ein Busteilnehmer aktiviert/deaktiviert wird, auch zur Eingabe mindestens eines Bezeichners, der beispielsweise den entsprechenden Busteilnehmer beschreibt, seine Lage/Position oder seine Zugehörigkeit zu einer Organisationseinheit angeben kann. Es ist z.B. auch möglich, den Busteilnehmern über dem Bezeichner eine neue Adresse zuzuordnen.

Beispielsweise aktiviert die Zentraleinheit einen Busteilnehmer nach dem anderen und ein Benutzer begibt sich an den Ort an dem er die Busteilnehmer katalogisieren will.

An dem betreffenden Ort wartet der Benutzer bis alle Busteilnehmer aktiviert wurden und benutzt das Eingabegerät zur Protokollierung der Einschaltvorgänge. Dabei speichert das Eingabegerät automatisch den Zeitpunkt zu dem es einen Eingabebefehl erhält und speichert zudem den ebenfalls eingegebenen Bezeichner für den entsprechenden Busteilnehmer. Bei Busteilnehmern, die Eingangsgeräte darstellen, betätigt der Benutzer das Eingangsgerät und protokolliert gleichzeitig über das Eingabegerät den Zeitpunkt/Zeitraum der Betätigung und vergibt ebenfalls einen Bezeichner für den entsprechenden Busteilnehmer. Anschließend begibt sich der Benutzer an einen anderen Ort, um weitere Busteilnehmer zu katalogisieren. Somit erfolgt die Zuweisung der Bezeichner/Benutzeradressen in einem Zustand, in dem der Benutzer bzw. sein zugeordnetes Eingabegerät nicht mit dem Bussystem kommuniziert.

Nach einem Ausführungsbeispiel der Erfindung ist es vorgesehen, dass sowohl die Zentraleinheit als auch das Eingabegerät mit einer einheitlichen Zeitbasis arbeitet. Dazu kann beispielsweise vorgesehen sein, dass die Zentraleinheit, wie auch das Eingabegerät, jeweils einen Zeitgeber aufweisen, der, beispielsweise bei einer Verbindung von Zentraleinheit und Eingabegerät, synchronisiert wird. Dies kann z.B. so erfolgen, dass der Startpunkt für jeden Zeitgeber bei einer Verbindung von Eingabegerät und Zentraleinheit auf einen definierten Startzeitpunkt gesetzt wird von dem aus dann die Protokollierung erfolgt (beispielsweise analog zum gleichzeitigen Starten zweier Stoppuhren). Die Zentraleinheit speichert dann beispielsweise ausgehend von dem definierten Zeitpunkt die Zeitpunkte oder Zeiträume für die die Busteilnehmer aktiviert sind.

Es ist jedoch auch möglich, dass sich der Zeitgeber des Eingabegerätes an den Zeitgeber der Zentraleinheit (oder umgekehrt) angleicht, beispielsweise während einer Verbindung.

Weiter ist es möglich, dass sowohl die Zentraleinheit als auch das Eingabegerät dazu eingerichtet ist, ein Zeitsignal zu empfangen, nachdem der jeweilige Zeitgeber eingestellt wird (z.B. eine Funkuhr). Damit kann eine Synchronisierung bei einer Verbindung entfallen. Eine gewisse Abweichung zwischen den Läufen der Zeitgeber ist dabei tolerabel und kann durch entsprechende Vorkehrungen, z.B. Pufferzeiten, abgefangen werden.

Nachdem der Benutzer alle Busteilnehmer in dem Eingabegerät erfasst hat, wird bei einer Verbindung zwischen Eingabegerät und Zentraleinheit eine Zuordnung zwischen Bezeichner und Adresse des Busteilnehmers hergestellt. Dabei werden die Zeitpunkte/Zeiträume, die von der Zentraleinheit für eine Aktivierung/Deaktivierung des Busteilnehmers protokolliert wurden mit den Zeitpunkten/Zeiträumen abgeglichen, die der Benutzer mit dem Eingabegerät protokolliert hat. Da von der Zentraleinheit zu jedem Zeitraum die entsprechende Adresse des aktivierten/deaktivierten Busteilnehmers gespeichert ist, und auf dem Eingabegerät zu jedem Zeitraum/Zeitpunkt der vom Benutzer eingegebene Bezeichner gespeichert ist, kann - bei Übereinstimmungen der Zeiträume/Zeitpunkte auf beiden Seiten - eine Zuordnung zwischen Adresse und Bezeichner erfolgen. Der Benutzer ist damit nicht an eine bestimmte Reihenfolge gebunden, in der er die Aktivierung der Busteilnehmer protokollieren muss, sondern kann beispielsweise zuerst alle Busteilnehmer in einem Raum katalogisieren, bevor er die Busteilnehmer in einem anderen Raum katalogisiert.

Die, beispielsweise sukzessive, Aktivierung der Busteilnehmer beginnt nach einem Durchlauf von neuem, so dass der Benutzer, sollte er gerade nicht am richtigen Ort sein wenn der entsprechende Busteilnehmer aktiviert/deaktiviert wird, die Aktivierung/Deaktivierung zu einem anderen Zeitraum protokollieren kann.

Die Zentraleinheit aktiviert/deaktiviert einen Busteilnehmer dabei stets für einen vorbestimmten Zeitraum. Eine Aktivierung aller Busteilnehmer beansprucht daher eine gewisse Zeit, für einen Durchlauf kann sich diese beispielsweise aus einem Produkt aus der Anzahl der Busteilnehmer mit dem Aktivierungszeitraum ergeben. Diese Zeitdauer verlängert sich natürlich noch, wenn mehrere Durchläufe von Busteilnehmeraktivierungen/-deaktivierungen durchgeführt werden müssen.

Um die Zeit, die benötigt wird, um alle Busteilnehmer zu katalogisieren zu verkürzen, sieht die vorliegende Erfindung in einem Ausführungsbeispiel vor, dass ein oder mehrere Aktivierungs-/Deaktivierungszeiträume der Busteilnehmer von dem Benutzer verkürzt werden können. Dazu ist es beispielsweise vorgesehen, dass der Benutzer über einen Busteilnehmer ein Signal zur Zentraleinheit sendet, woraufhin die Zentraleinheit einen anderen, z.B. den nächsten Busteilnehmer in der Adressfolge, aktiviert/deaktiviert. Der Benutzer kann somit die benötigte Zeit für einen Durchlauf erheblich verkürzen und beispielsweise schneller alle Busteilnehmer in einem Raum katalogisieren. Eine Signalisierung kann beispielweise über einen an den Bus angeschlossenen Schalter erfolgen. Es kann dabei vorgesehen sein, dass der Busteilnehmer, z.B. der Schalter, in einer bestimmten Folge betätigt wird, um das Signal an die Zentraleinheit zu übermitteln. Es ist jedoch zu verstehen, dass auch andere Busteilnehmerinteraktionen, z.B. eine Interaktion mit einem Sensor, zur Beschleunigung des Verfahrens zum Einsatz kommen können.

Die Zentraleinheit und das Eingabegerät können die Zeitpunkte/Zeiträume und die Adresse bzw. den Bezeichner zum Beispiel in einer Tabelle speichern. Es ist dabei möglich, dass Zentraleinheit und Eingabegerät (eindeutige) Zeitstempel speichern und eine Zuordnung beispielweise dann erfolgt, wenn ein Zeitstempel der von dem Eingabegerät gespeichert wurde in einem Zeitintervall um einen Zeitstempel liegt, der von der Zentraleinheit für eine Aktivierung/Deaktivierung gespeichert wurde.

Erst nach Abschluss des Verfahrens erfolgt wieder eine Kommunikation zwischen der Zentraleinheit und dem Eingabegerät, um z.B. die im getrennten Zustand angelegten Tabellen zu synchronisieren.

Vorteil ist also, dass, z.B. während dem Anlegen der Tabellen, keine Kommunikation zwischen der Zentraleinheit und dem Eingabegerät erfolgt. Vielmehr werden wie oben geschildert z.B. getrennte Tabellen angelegt. Somit ist es nicht notwendig, dass der Benutzer bzw. dessen Eingabegerät mittels eines Kabels oder auch kabellos während der Adresszuweisung mit dem Bussystem in Verbindung steht. Gleichzeitig ist das Benutzergerät mit der Zentraleinheit über die gemeinsame Zeitbasis logisch verbunden.

In einer weiteren Ausführungsform der Erfindung kann ein Benutzer in einem Hardcopy-Gebäudeplan ganz einfach den Zeitpunkt zugeordnet dem jeweiligen Busteilnehmer notieren, zudem er die Aktivierung des Busteilnehmers bemerkt hat. Danach könnte händisch die Zuordnung der wahrgenommenen Aktivierung zu der Benutzeradresse bzw. Benutzerkennung in dem Bussystem vorgenommen werden.

In noch einer weiteren Ausführungsform kann ein Gebäudeplan virtuell auf einem Display, z.B. einem Touchscreen dem Benutzer angezeigt werden. Der Benutzer kann somit bei Wahrnehmung der Aktivierung eines Busteilnehmers auf den wahrgenommenen Busteilnehmer drücken. Beispielsweise können in dem virtuellen Gebäudeplan für jeden Busteilnehmer Informationen und/oder Bezeichner hinterlegt sein/werden, die dann auf die Benutzerinteraktion hin mit einem Zeitpunkt/Zeitraum verknüpft (im Hintergrund läuft dann auf diesem Eingabegerät (z.B. Touchscreen, Tablet-PC, Tablet, ...) die Zeitbasis, und nach abgeschlossener Adresszuweisung kann dieses Benutzergerät mit Touchscreen dann drahtlos oder drahtgebunden mit der Zentraleinheit des Bussystems die Synchronisierung durchführen.

Es ist zudem anzumerken, dass das oben beschriebene Verkürzen des Aktivierungs-/Deaktivierungszeitraumes bei einem Zählen von Takten/Taktraten nicht funktioniert, da ein stetiges Inkrementieren des Taktes erfolgen muss um eine Zuweisung nach dem Stand der Technik zu ermöglichen. Somit ist die oben angesprochene Schnellvorlauf-("fast for-ward")-Funktion nicht möglich.

Figs. 1a-1r veranschaulichen das Lokalisierungsverfahren nach der Erfindung unter Verwendung der erfinderischen Systems (hier mit einer Aktivierung der Busteilnehmer) an einem Beispiel:

Fig. 1a: Die Zentraleinheit vergibt (Short-)Adressen 0...35 zufällig.

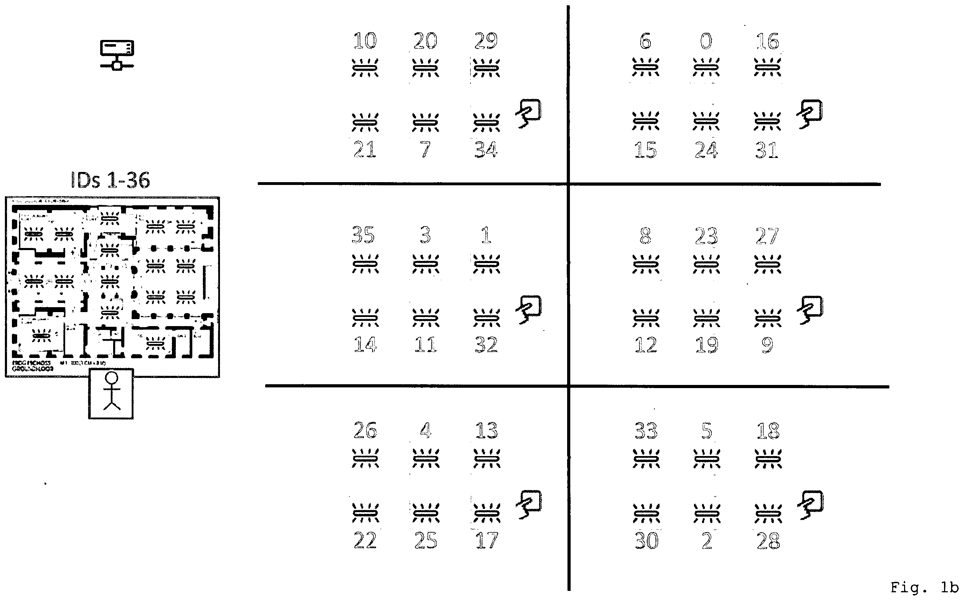

Fig. 1b: Der Benutzer hält z.B. einen Adressierplan/-liste/Gebäudeplan mit Bezeichnern (z.B. IDs 1-36) bereit.

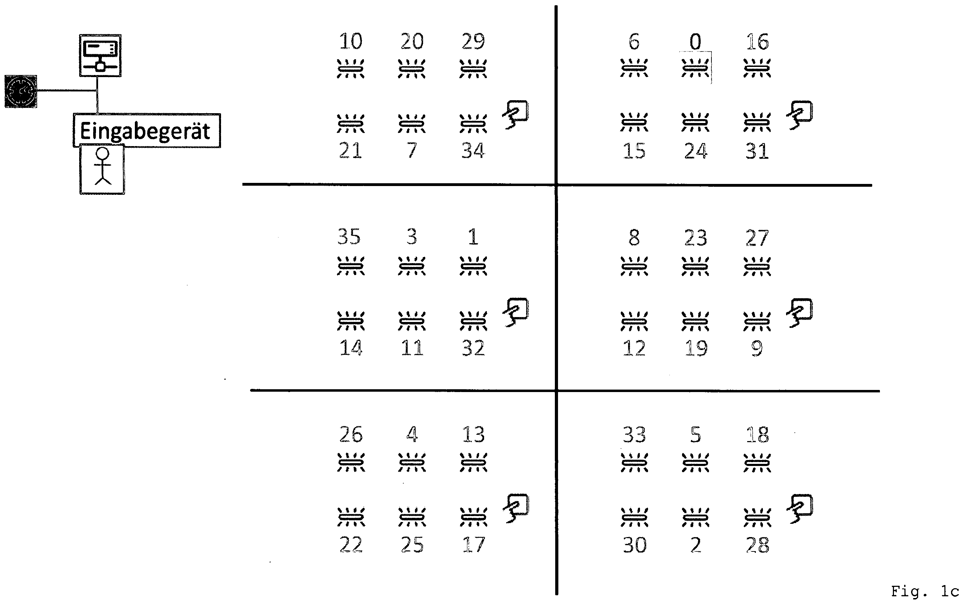

Fig. 1c: Die Zeitgeber starten synchronisiert.

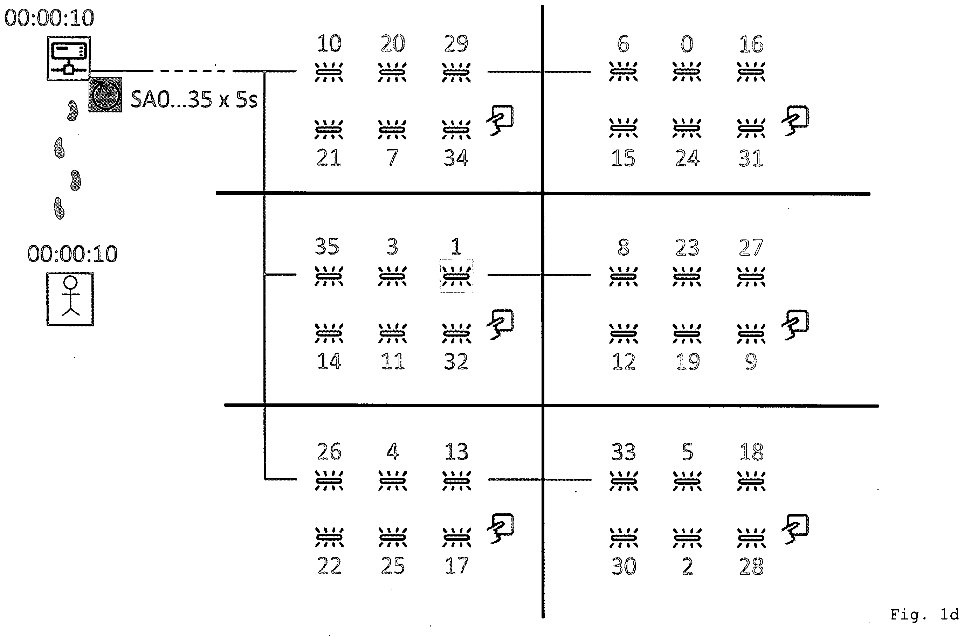

Fig. 1d: Der erste Busteilnehmer (Adresse 1) wird aktiviert. Die anderen Busteilnehmer werden sukzessive Aktiviert, z.B. in Abständen von 5 Sekunden.

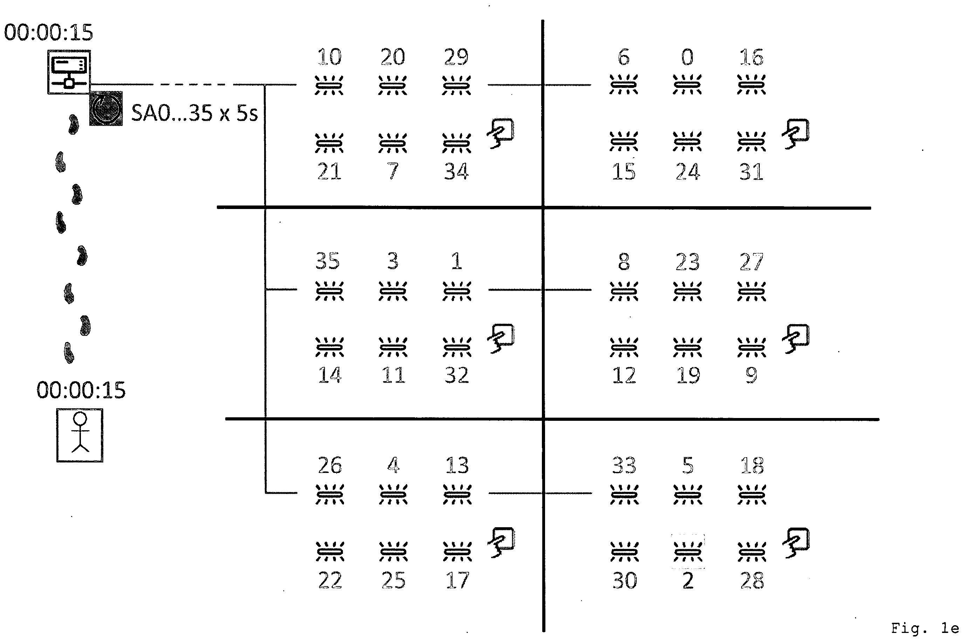

Fig. 1e: Der nächste Busteilnehmer (Adresse 2) meldet sich nach 5 Sekunden.

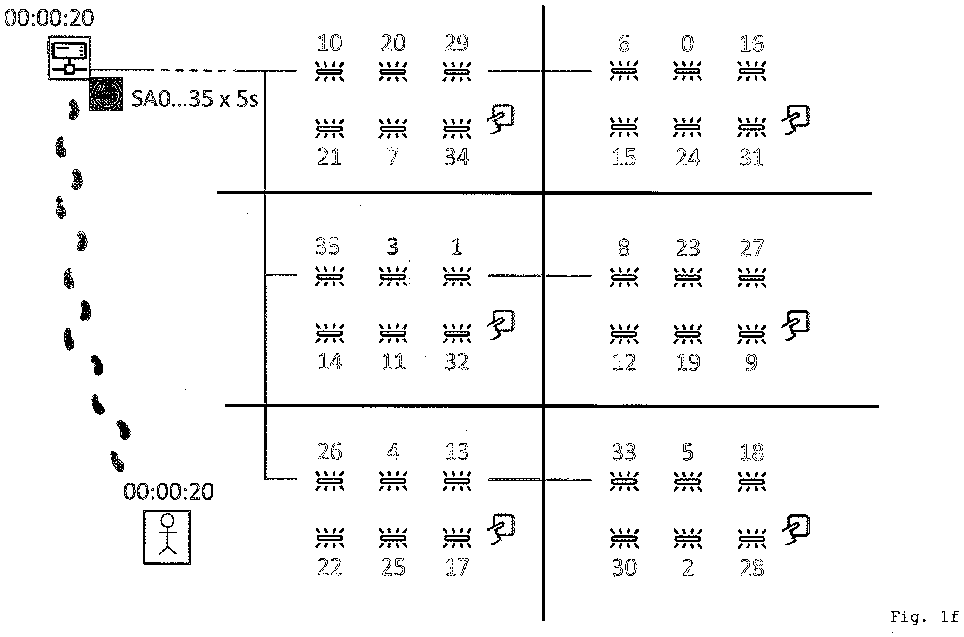

Fig. 1f: Der nächste Busteilnehmer (Adresse 3) meldet sich nach 5 Sekunden.

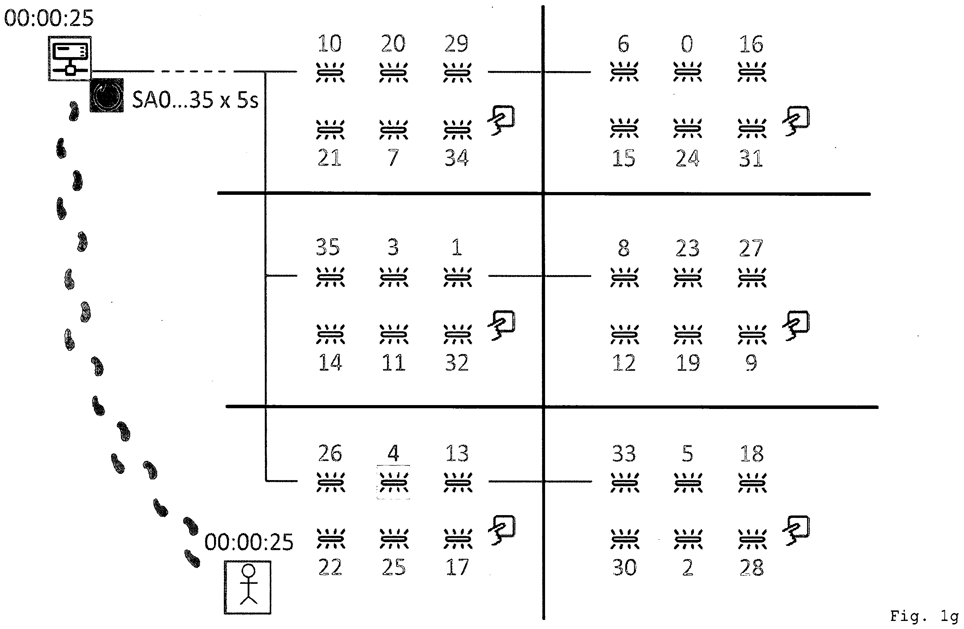

Fig. 1g: Der nächste Busteilnehmer (Adresse 4) meldet sich nach 5 Sekunden.

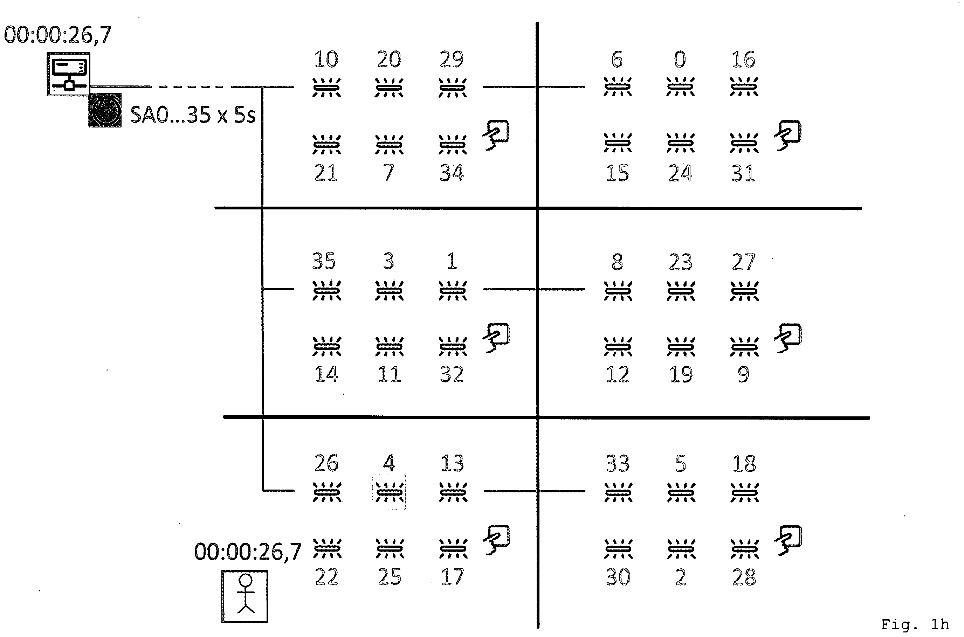

Fig. 1h: Der Benutzer erkennt den aktivierten Busteilnehmer (z.B. eingeschaltete Leuchte) (Adresse 4) und betätigt das Eingabegerät um 00:00:26,7 um den Zeitpunkt zu speichern.

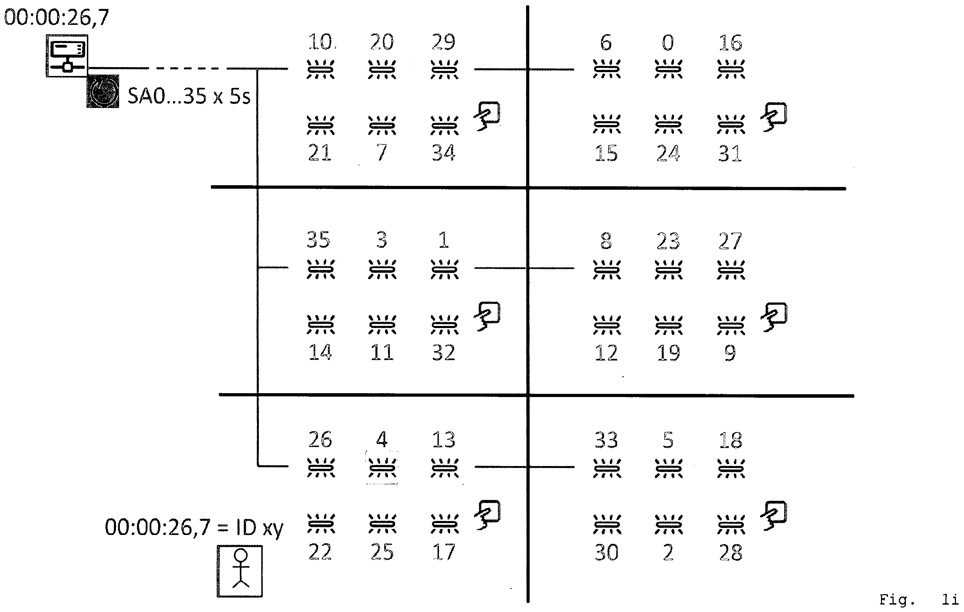

Fig. 1i: Der Benutzer ordnet diesem Zeitpunkt einen Bezeichner (ID) xy aus dem Adressierplan zu.

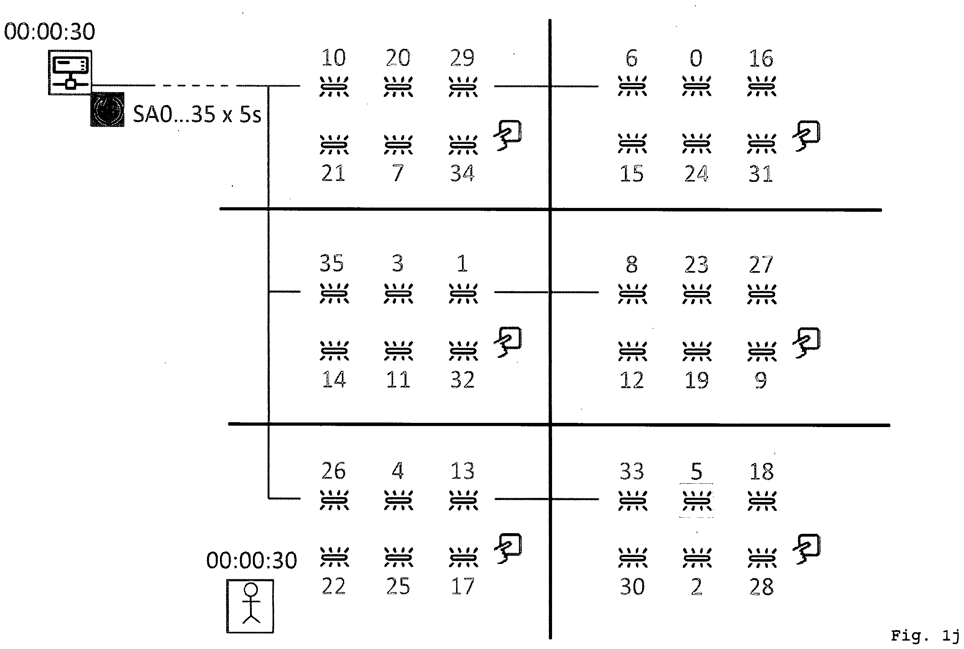

Fig. 1j: Währenddessen läuft die Aktivierung der Busteilnehmer weiter. Um 00:00:30 ist der Busteilnehmer mit Adresse 5 aktiv.

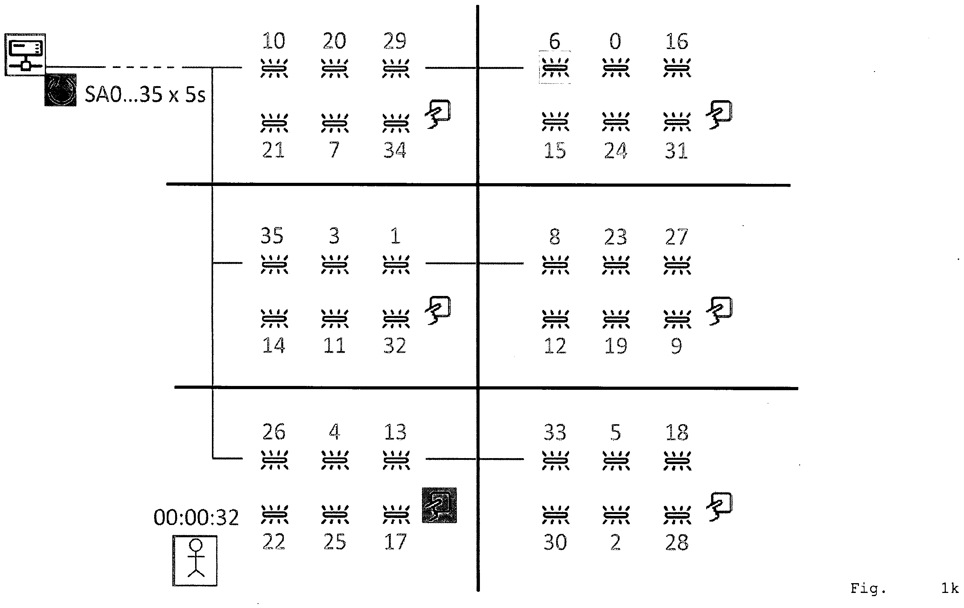

Fig. 1k: Der Benutzer kann den Aktivierungszeitraum verkürzen, z.B. durch Interaktion mit einem Eingangsgerät, wie z.B. einem Schalter.

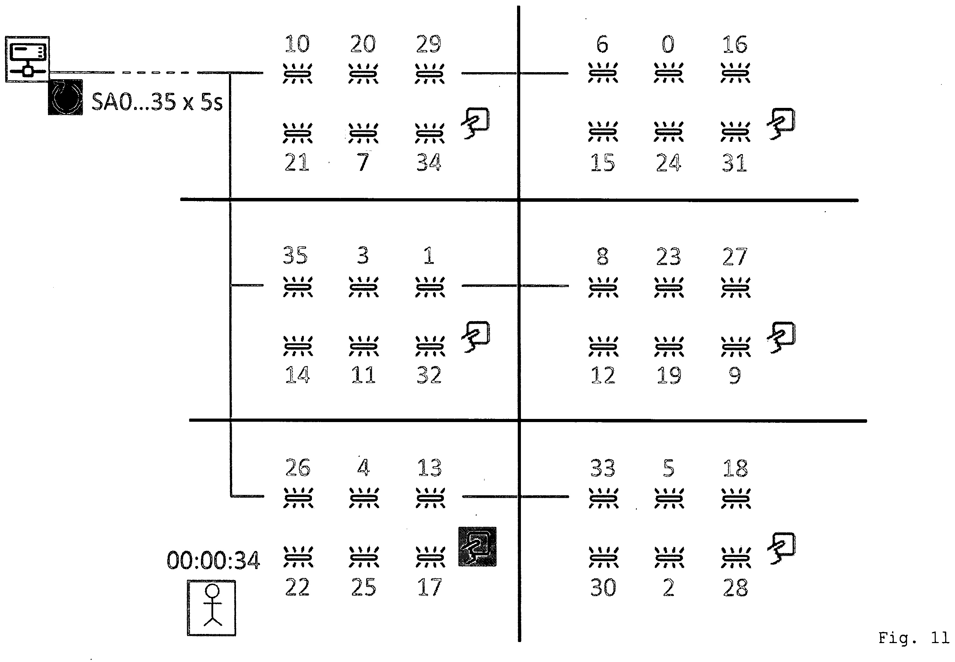

Fig. 1l: Die Verkürzung kann mehrmals erfolgen ...

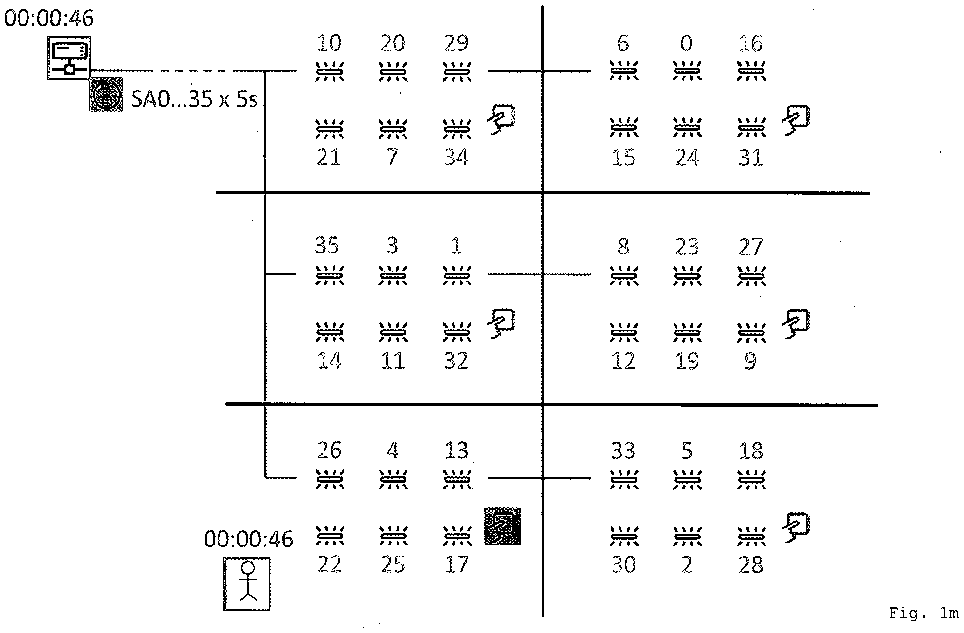

Fig. 1m: ... bis der nächste Busteilnehmer für den Benutzer erkennbar aktiviert wird.

Fig. ln: Der Benutzer sieht den aktivierten/deaktivierten Busteilnehmer (z.B. eingeschaltete Leuchte) (Adresse 13) und betätigt das Eingabegerät um 00:00:46,9 um den Zeitpunkt zu speichern.

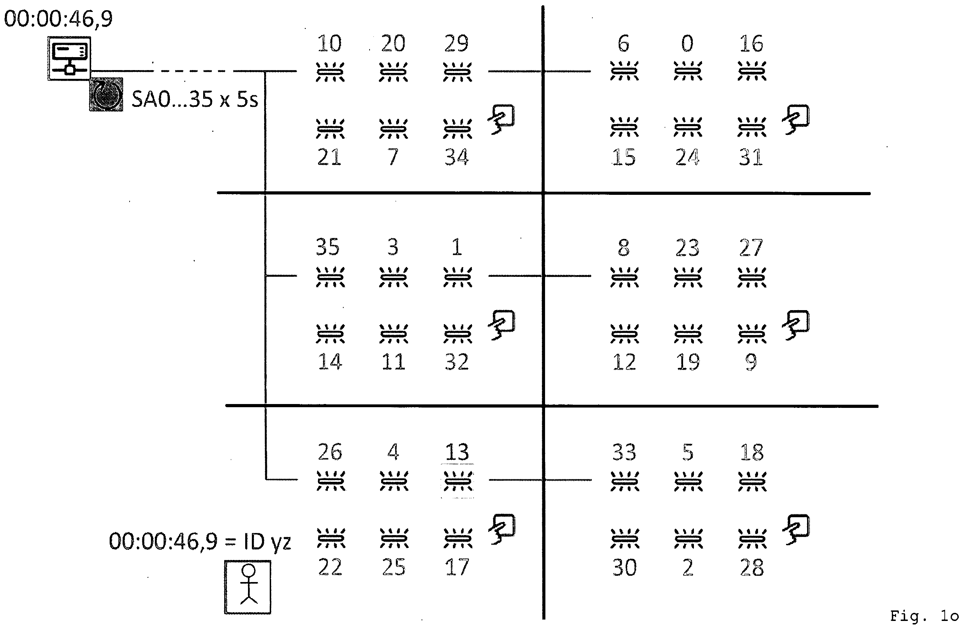

Fig. 1o: Der Benutzer ordnet diesem Zeitpunkt einen Bezeichner (ID) yz aus dem Adressierplan zu.

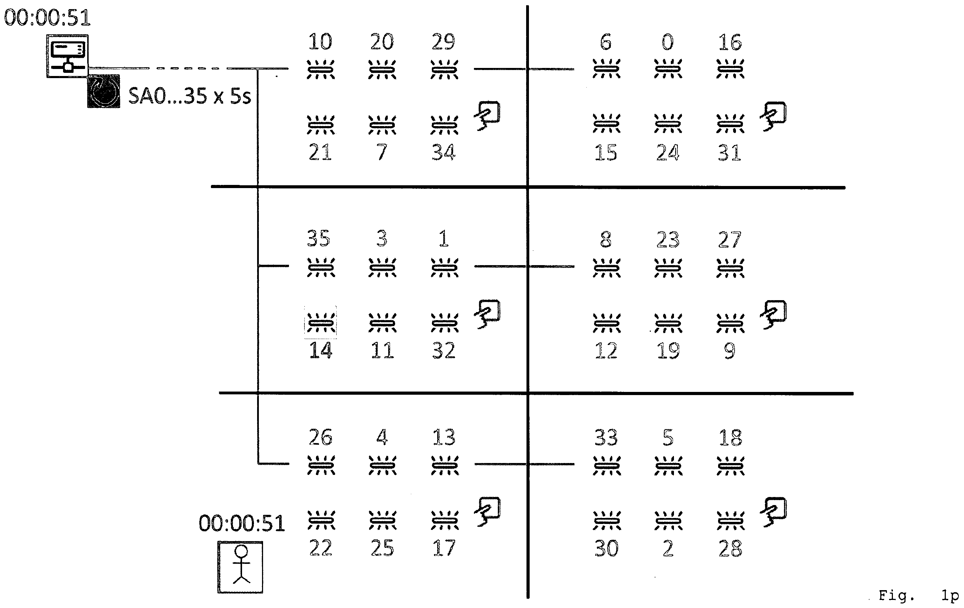

Fig. 1p: Währenddessen läuft die sukzessive Aktivierung weiter (00:00:51, Adresse 14). Nach der letzten Aktivierung (Adresse 35) beginnt die Aktivierung wieder von vorn (Schleife).

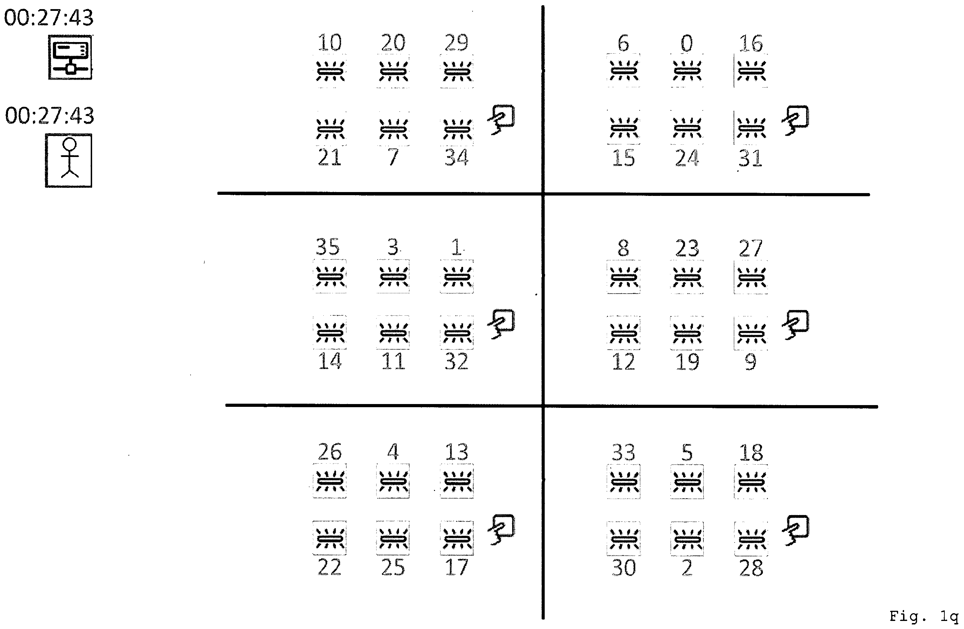

Fig. 1q: Hat der Benutzer alle Busteilnehmer im Raum/am Strang erfasst, geht er zur weiteren Erfassung in den nächsten Raum/zum nächsten Strang. Sind alle Busteilnehmer erfasst, beendet er den Zeitzähler und die Schleife.

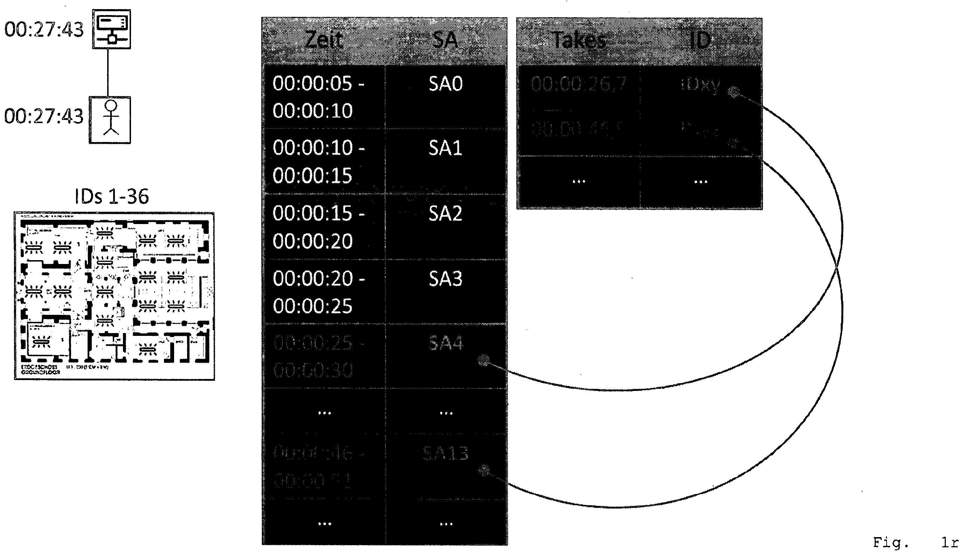

Fig. 1r: Es sind nun in der Zentraleinheit und in dem Eingabegerät Zeit-Adresse bzw. Zeit-Bezeichner Zuordnungen gespeichert, z.B. existieren nun zwei Zuordnung-Listen. Durch eine Synchronisation erfolgt die Zuordnung des Bezeichners (ID) zur Adresse (= Lokalisierung).

Der Vorteil eine Aktivierungs-/Deaktivierungszeit verkürzen zu können soll nun Verdeutlicht werden.

Im schlechtesten Fall (worst case) berechnet sich die Zeit für die Lokalisierung bei 6 Räumen, 6 Busteilnehmern (Leuchten) pro Raum und einer eingestellten Aktivierungs-/Deaktivierungszeit von 7 Sekunden wie folgt:

- Dauer bis alle Busteilnehmer eines Raumes sich gemeldet haben (worst case): 36 * 7s = 252s.
- 6 Räume * 252s = 1512s, entspricht 25 Minuten und 12 Sekunden (00:25:12) ohne Verwendung des Schnellvorlaufs.

Dagegen:

- Dauer mit Verwendung der Schnellvorlaufs (Abkürzung des 7s-Takts auf 3s) (worst case):

$$6 * 7s + 30 * 3s = 132s.$$

- Bei 6 Räumen: 6 x 132s = 612s, entspricht 13 Minuten und 12 Sekunden (00:13:12).

Bei einer Variation von Raumanzahl und/oder Aktivierungszeit tritt der Vorteil noch stärker in den Vordergrund.

Beispiel für 10 Räume mit 6 Busteilnehmer pro Raum (=60 Busteilnehmer) und eingestellter Aktivierungs-/Deaktivierungszeit von 7s:

- Ohne Schnellvorlauf:

$$60 * 7s = 420s;$$

10 Räume * 420s = 4200s. Das entspricht 01:10:00.

- Mit Schnellvorlauf (Abkürzung des 7s-Takts auf 3s):

$$6 * 7s + 54 * 3s = 204s;$$

10 Räume x 204s = 2040s. Das entspricht 0034:00 und damit einer Zeitersparnis von über einer halben Stunde.

Beispiel für 16 Räume mit 4 Busteilnehmern und einer eingestellten Aktivierungs-/Deaktivierungszeit von 7s [für 5s sind die Werte in eckigen Klammern angegeben]:

Ohne Schnellvorlauf:

- Dauer bis alle Leuchten eines Raumes sich gemeldet haben (worst case) 64 * 7s = 448s [320s].
- Daraus folgt für 16 Räume:
  16 Räume * 448s = 7168s = 01:59:28 [01:25:20].

Mit Schnellvorlauf:

- Dauer mit Verkürzung des 7s-Takts auf 3s (worst case)

$$4 * 7s + 60 * 3s = 208s \ [200s].$$

- Daraus folgt für 16 Räume:
  16 Räume x 208s = 3328s = 00:55:28 [00:53:20].

Die tatsächlichen Zeiten für Lokalisierungen ohne Schellvorlauf werden im Allgemeinen etwas unter den berechneten (worst case) Zeiten liegen. Dennoch ist der Zeitgewinn bei Einsatz des Schnellvorlaufs beträchtlich (beispielsweise zwischen 30% und 60%).

**Patentansprüche**

1. Zentraleinheit, die über eine Bus mit mehreren Gebäudetechnik-Busteilnehmern verbindbar ist, wobei die Zentraleinheit in einen Betriebsmodus versetzbar ist, in dem sie:

   - eine durchlaufende Zeitzählung ausgehend von einem definierten Zeitpunkt startet,
   - jeweils einen Busteilnehmer durch einen adressierten Busbefehl aktiviert/deaktiviert, vorzugsweise bis nacheinander sämtliche Busteilnehmer aktiviert wurden, und

   wobei die Zentraleinheit einen Speicher aufweist oder funktionell mit einem Speicher verbunden ist, in dem ein Zeitpunkt oder Zeitraum der Aktivierung/Deaktivierung des Busteilnehmers zugeordnet zu seiner Adresse abgelegt ist, wobei der definierte Zeitpunkt und/oder die Zeitzählung mit einem Eingabegerät synchronisiert ist, und wobei die Zentraleinheit mindestens eine Schnittstelle zur Verbindung und/oder für einen Datenaustausch mit einem Mobilteil aufweist,
   **dadurch gekennzeichnet, dass**
   die Zentraleinheit dazu eingerichtet ist, während der Aktivierungs-/Deaktivierungsfolge eines Busteilnehmers ein Signal über den Bus zu empfangen und daraufhin einen anderen Busteilnehmer zu aktivieren/deaktivieren.

2. Zentraleinheit nach Anspruch 1, wobei die Zentraleinheit dazu eingerichtet ist, die Busteilnehmer zu adressieren.

3. Zentraleinheit nach einem der vorgehenden Ansprüche, wobei die Zentraleinheit einen Zeitgeber aufweist und/oder dazu eingerichtet ist, ein Zeitsignal zu empfangen.

4. System aus einer Zentraleinheit nach einem der Ansprüche 1 bis 3 und einem Eingabegerät, das

   - einen Speicher aufweist oder funktionell mit einem Speicher verbunden ist, wobei
   - das Eingabegerät eine durchlaufende Zeitzählung ausgehend von einem definierten Zeitpunkt startet und in dem Speicher ein Zeitpunkt oder Zeitraum zugeordnet zu einem Bezeichner abgelegt ist, wobei der definierte Zeitpunkt und/oder die Zeitzählung mit einer Zentraleinheit synchronisiert ist, und wobei das Eingabegerät mindestens eine Schnittstelle zur Verbindung und/oder für einen Datenaustausch mit der Zentraleinheit aufweist,
   wobei das Eingabegerät dazu eingerichtet ist, den Zeitpunkt oder Zeitraum in Zuordnung mit dem Bezeichner auf eine Benutzerinteraktion an einer Benutzerschnittstelle zu speichern, und wobei

   - die Zentraleinheit und/oder das Eingabegerät dazu eingerichtet sind, in einem Abgleichprozess dem von dem Eingabegerät gespeicherten Zeitpunkt oder Zeitraum einen von der Zentraleinheit gespeicherten Zeitpunkt oder Zeitraum zuzuordnen und so eine Zuordnung zwischen dem Zeitpunkt oder Zeitraum in der Zentraleinheit zugeordneten Adresse und dem Zeitpunkt oder Zeitraum in dem Eingabegerät zugeordneten Bezeichner herzustellen.

**5.** System nach Anspruch 4,
wobei das Eingabegerät einen Zeitgeber aufweist und/oder dazu eingerichtet ist, ein Zeitsignal zu empfangen.

**6.** Verfahren zur Lokalisierung von an einem Bus angeschlossenen Busteilnehmern, wobei

a. eine Zentraleinheit, die eine durchlaufende Zeitzählung ausgehend von einem definierten Zeitpunkt startet, jeweils einen Busteilnehmer durch einen adressierten Busbefehl aktiviert/deaktiviert, vorzugsweise bis nacheinander sämtliche Busteilnehmer aktiviert/deaktiviert wurden, und bei Aktivierung/Deaktivierung eines Busteilnehmers für einen Zeitpunkt oder Zeitraum eine Adresse des Busteilnehmers in Zuordnung zu dem Zeitpunkt oder Zeitraum speichert,
b. ein Eingabegerät eine durchlaufende Zeitzählung ausgehend von einem definierten Zeitpunkt startet und in einem Speicher ein Zeitpunkt oder Zeitraum zugeordnet zu einem Bezeichner auf eine Benutzerinteraktion hin speichert, und wobei
c. die Zentraleinheit und/oder das Eingabegerät in einem Abgleichprozess dem von dem Eingabegerät gespeicherten Zeitpunkt oder Zeitraum einen von der Zentraleinheit gespeicherten Zeitpunkt oder Zeitraum zuordnet und so eine Zuordnung zwischen dem Zeitpunkt oder Zeitraum in der Zentraleinheit zugeordneten Adresse und dem Zeitpunkt oder Zeitraum in dem Eingabegerät zugeordneten Bezeichner herzustellen,

wobei die Zentraleinheit und das Eingabegerät jeweils mindestens eine Schnittstelle zur Verbindung untereinander und/oder für einen Datenaustausch untereinander aufweisen,
wobei die Zentraleinheit und das Eingabegerät über eine gemeinsame Zeitbasis logisch verbindbar sind, und
wobei die Zentraleinheit dazu eingerichtet ist, während der Aktivierungs-/Deaktivierungsfolge eines Busteilnehmers ein Signal über den Bus zu empfangen und daraufhin einen anderen Busteilnehmer zu aktivieren/deaktivieren.

**Claims**

**1.** Central unit which can be connected to a plurality of building technology bus subscribers via a bus,
wherein the central unit can be shifted into an operating mode, in which it:

- starts a continuous time count beginning at a defined point in time,
- in each case activates/deactivates one bus subscriber by means of an addressed bus command, preferably until all the bus subscribers have been activated one after the other, and

wherein the central unit comprises a memory or is functionally connected to a memory, in which a point in time or a time period of the activation/deactivation of the bus subscriber is stored in association with the address of said subscriber, wherein the defined point in time and/or the time count is synchronized with an input device, and wherein the central unit comprises at least one interface for connecting to and/or exchanging data with a mobile component,
**characterized in that**
the central unit is configured to receive a signal during the activation/deactivation sequence of a bus subscriber via the bus and subsequently to activate/deactivate another bus subscriber.

**2.** Central unit according to Claim 1, wherein the central unit is configured to address the bus subscribers.

**3.** Central unit according to any one of the preceding Claims, wherein the central unit comprises a timer and/or is configured to receive a time signal.

**4.** System comprising a central unit according to one of Claims 1 to 3 and an input device, which

- comprises a memory or is functionally connected to a memory, wherein
- the input device starts a continuous time count beginning at a defined
point in time and a point in time or a time period in association with an identifier is stored in the memory, wherein the defined point in time and/or the time count is synchronized with a central unit, and
wherein the input device comprises at least one interface for connecting to and/or exchanging data with the central unit,
wherein the input device is configured to store the point in time or the time period in association with the identifier in response to a user interaction on a user interface, and wherein

- the central unit and/or the input device are configured to associate the point in time or time period stored by the input device with a point in time or time period stored by the central unit in a reconciliation process, and thus to establish an association between the address associated with the point in time or time period in the central unit and the identifier associated with the point in time or time period in the input device.

5. System according to Claim 4,
wherein the input device comprises a timer and/or is configured to receive a time signal.

6. Method for localizing bus subscribers connected to a bus, wherein

a. a central unit, which starts a continuous time count beginning at a defined point in time, activates/deactivates one respective bus subscriber by means of an addressed bus command, preferably until all the bus subscribers have been activated one after the other, and, for a point in time or time period, stores an address of the bus subscriber in association with the point in time or time period when a bus subscriber is activated/deactivated,
b. an input device starts a continuous time count beginning at a defined point in time and stores a point in time or time period associated with an identifier in response to a user interaction on a user interface, and wherein
c. the central unit and/or the input device associate the point in time or time period stored by the input device with a point in time or time period stored by the central unit in a reconciliation process, and thus establish an association between the address associated with the point in time or time period in the central unit and the identifier associated with the point in time or time period in the input device,

wherein the central unit and the input device respectively comprise at least one interface for connecting among one another and/or exchanging data among one another,
wherein the central unit and the input device are logically connectable using a common time base, and
wherein the central unit is configured to receive a signal during the activation/deactivation sequence of a bus subscriber via the bus and subsequently to activate/deactivate another bus subscriber.

**Revendications**

1. Unité centrale, qui peut être reliée par le biais d'un bus à plusieurs participants de technique de bâtiment sur le bus, l'unité centrale pouvant être mise dans un mode de fonctionnement, dans lequel elle :

- lance un comptage de temps continu commençant à un moment défini,
- active/désactive respectivement un participant sur le bus au moyen d'une commande de bus adressée, de préférence jusqu'à ce que tous les participants sur le bus aient été activés successivement, et

l'unité centrale comprenant une mémoire ou étant reliée fonctionnellement à une mémoire, dans laquelle un moment ou une période de temps de l'activation/désactivation du participant sur le bus est enregistré en association avec son adresse, le moment défini et/ou le comptage de temps étant synchronisé avec un appareil de saisie, et
l'unité centrale comprenant au moins une interface pour la connexion et/ou pour l'échange de données avec une partie mobile,
**caractérisée en ce que**
l'unité centrale est configurée pour recevoir un signal à travers le bus pendant l'activation/désactivation d'un participant sur le bus, et pour, suite à cela, activer/désactiver un autre participant sur le bus.

2. Unité centrale selon la revendication 1, l'unité centrale étant configurée pour adresser les participants sur le bus.

3. Unité centrale selon l'une quelconque des revendications précédentes, l'unité centrale comprenant un temporisateur et/ou étant configurée pour recevoir un signal horaire.

4. Système composé d'une unité centrale selon l'une quelconque des revendications 1 à 3 et un appareil de saisie, qui

- comprend une mémoire ou est relié fonctionnellement à une mémoire,
- l'appareil de saisie lançant un comptage de temps continu commençant à un moment

défini et un moment ou une période de temps étant enregistré dans la mémoire en association avec un identifiant, le moment défini et/ou le comptage de temps étant synchronisés avec une unité centrale, et

l'appareil de saisie comprenant au moins une interface pour la connexion et/ou pour l'échange de données avec l'unité centrale,

l'appareil de saisie étant configuré pour enregistrer le moment ou la période de temps en association avec l'identifiant d'une interaction d'utilisateur sur une interface utilisateur, et

- l'unité centrale et/ou l'appareil de saisie étant configurés pour associer, dans un processus d'adaptation, le moment ou la période de temps enregistré par l'appareil de saisie avec un moment ou une période de temps enregistré par l'unité centrale et pour créer ainsi une association entre l'adresse associée au moment ou à la période de temps dans l'unité centrale et l'identifiant associé au moment ou à la période de temps dans l'appareil de saisie.

5. Système selon la revendication 4,
   l'appareil de saisie comprenant un temporisateur et/ou est configuré pour recevoir un signal horaire.

6. Procédé pour la localisation de participants sur bus connectés à un bus,

   a. une unité centrale, qui lance un comptage de temps continu commençant à un moment défini, activant/désactivant respectivement un participant sur le bus au moyen d'une commande de bus adressée, de préférence jusqu'à ce que tous les participants sur le bus aient été activés/désactivés successivement, et, lors de l'activation/désactivation d'un participant sur le bus pour un moment ou une période de temps, enregistrant une adresse du participant sur le bus en association avec le moment ou la période de temps,
   b. un appareil de saisie lançant un comptage de temps commençant à un moment défini et enregistrant dans une mémoire un moment ou une période de temps associé à un identifiant d'une interaction d'utilisateur, et
   c. l'unité centrale et/ou l'appareil de saisie associant, dans un processus d'adaptation, le moment ou la période de temps enregistré par l'appareil de saisie avec un moment ou une période de temps enregistré par l'unité centrale et créant ainsi une association entre l'adresse associée au moment ou à la période de temps dans l'unité centrale et l'identifiant associé au moment ou à la période de temps dans l'appareil de saisie,

   l'unité centrale et l'appareil de saisie comprenant respectivement au moins une interface pour la connexion entre eux et/ou pour l'échange entre eux de données, l'unité centrale et l'appareil de saisie pouvant être reliés logiquement à travers une base de temps commune, et l'unité centrale étant configurée pour recevoir un signal à travers le bus pendant l'activation/désactivation d'un participant sur le bus, et pour, suite à cela, activer/désactiver un autre participant sur le bus.

Fig. 1a

EP 2 493 123 B1

IDs 1-36

| 10 | 20 | 29 |   | 6 | 0 | 16 |
| 21 | 7 | 34 |   | 15 | 24 | 31 |

| 35 | 3 | 1 |   | 8 | 23 | 27 |
| 14 | 11 | 32 |   | 12 | 19 | 9 |

| 26 | 4 | 13 |   | 33 | 5 | 18 |
| 22 | 25 | 17 |   | 30 | 2 | 28 |

Fig. 1b

Fig. 1c

Eingabegerät

Fig. 1d

EP 2 493 123 B1

00:00:15

SA0...35 x 5s

00:00:15

| 10 | 20 | 29 | | 6 | 0 | 16 |
| 21 | 7 | 34 | | 15 | 24 | 31 |

| 35 | 3 | 1 | | 8 | 23 | 27 |
| 14 | 11 | 32 | | 12 | 19 | 9 |

| 26 | 4 | 13 | | 33 | 5 | 18 |
| 22 | 25 | 17 | | 30 | 2 | 28 |

Fig. 1e

Fig. 1f

00:00:20

SA0...35 x 5s

| 10 | 20 | 29 | | 34 | 7 | 21 |
| 35 | 3 | 1 | | 32 | 11 | 14 |
| 26 | 4 | 13 | | 17 | 25 | 22 |

| 6 | 0 | 16 | | 31 | 24 | 15 |
| 8 | 23 | 27 | | 9 | 19 | 12 |
| 33 | 5 | 18 | | 28 | 2 | 30 |

00:00:20

Fig. 1g

00:00:26,7

SA0...35 x 5s

| 10 | 20 | 29 | | 6 | 0 | 16 |
|----|----|----|----|----|----|----|
| 21 | 7 | 34 | | 15 | 24 | 31 |

| 35 | 3 | 1 | | 8 | 23 | 27 |
|----|----|----|----|----|----|----|
| 14 | 11 | 32 | | 12 | 19 | 9 |

| 26 | 4 | 13 | | 33 | 5 | 18 |
|----|----|----|----|----|----|----|
00:00:26,7
| 22 | 25 | 17 | | 30 | 2 | 28 |

Fig. 1h

Fig. 1i

00:00:26,7

SA0...35 x 5s

00:00:26,7 = ID xy

Fig. 1j

EP 2 493 123 B1

SA0...35 x 5s

| 10 | 20 | 29 | | 6 | 0 | 16 |
| 21 | 7 | 34 | | 15 | 24 | 31 |

| 35 | 3 | 1 | | 8 | 23 | 27 |
| 14 | 11 | 32 | | 12 | 19 | 9 |

| 26 | 4 | 13 | | 33 | 5 | 18 |
| 22 | 25 | 17 | | 30 | 2 | 28 |

00:00:32

Fig. 1k

Fig. 11

Fig. 1m

EP 2 493 123 B1

00:00:46,9

SA0...35 x 5s

| 10 | 20 | 29 | | 6 | 0 | 16 |
| 21 | 7 | 34 | | 15 | 24 | 31 |
| 35 | 3 | 1 | | 8 | 23 | 27 |
| 14 | 11 | 32 | | 12 | 19 | 9 |
| 26 | 4 | 13 | | 33 | 5 | 18 |
| 22 | 25 | 17 | | 30 | 2 | 28 |

00:00:46,9

Fig. 1n

EP 2 493 123 B1

00:00:46,9

SA0...35 x 5s

| 10 | 20 | 29 | | 6 | 0 | 16 |
| 21 | 7 | 34 | | 15 | 24 | 31 |
| 35 | 3 | 1 | | 8 | 23 | 27 |
| 14 | 11 | 32 | | 12 | 19 | 9 |
| 26 | 4 | 13 | | 33 | 5 | 18 |
| 22 | 25 | 17 | | 30 | 2 | 28 |

00:00:46,9 = ID yz

Fig. 1o

00:00:51

SA0...35 x 5s

| 10 | 20 | 29 |  | 6 | 0 | 16 |
|----|----|----|--|---|---|----|
| 21 | 7  | 34 |  | 15| 24| 31 |

| 35 | 3  | 1  |  | 8 | 23| 27 |
|----|----|----|--|---|---|----|
| 14 | 11 | 32 |  | 12| 19| 9  |

| 26 | 4  | 13 |  | 33| 5 | 18 |
|----|----|----|--|---|---|----|
| 22 | 25 | 17 |  | 30| 2 | 28 |

00:00:51

Fig. 1p

00:27:43

00:27:43

| 10 | 20 | 29 |
| 21 | 7 | 34 |

| 6 | 0 | 16 |
| 15 | 24 | 31 |

| 35 | 3 | 1 |
| 14 | 11 | 32 |

| 8 | 23 | 27 |
| 12 | 19 | 9 |

| 26 | 4 | 13 |
| 22 | 25 | 17 |

| 33 | 5 | 18 |
| 30 | 2 | 28 |

EP 2 493 123 B1

Fig. 1q

EP 2 493 123 B1

00:27:43

00:27:43

IDs 1-36

| Zeit | SA | Takes | ID |
|---|---|---|---|
| 00:00:05 - 00:00:10 | SA0 | 00:00:26,7 | IDxy |
| 00:00:10 - 00:00:15 | SA1 | | |
| 00:00:15 - 00:00:20 | SA2 | ... | ... |
| 00:00:20 - 00:00:25 | SA3 | | |
| 00:00:25 - 00:00:30 | SA4 | | |
| ... | ... | | |
| 00:00:46 - 00:00:51 | SA13 | | |
| ... | ... | | |

Fig. 1r

**IN DER BESCHREIBUNG AUFGEFÜHRTE DOKUMENTE**

**In der Beschreibung aufgeführte Patentdokumente**

- AT 507908 A4